Europäisches Patentamt

European Patent Office

Office européen des brevets

(11) Publication number: **0 328 705 B1**

(12) **EUROPEAN PATENT SPECIFICATION**

(45) Date of publication of patent specification: **06.05.92**

(51) Int. Cl.⁵: **A47J  31/56**, A47J 31/52, A47J 31/36

(21) Application number: **88102361.8**

(22) Date of filing: **18.02.88**

(54) **Coffee-machine run by a microprocessor with control for intensive work.**

(43) Date of publication of application:
**23.08.89 Bulletin  89/34**

(45) Publication of the grant of the patent:
**06.05.92 Bulletin  92/19**

(84) Designated Contracting States:
**AT BE CH DE ES FR LI LU NL**

(56) References cited:
**EP-A- 0 093 366
EP-A- 0 201 656
FR-A- 1 569 903
GB-A- 1 024 601
US-A- 4 470 999**

(73) Proprietor: **LA SAN MARCO S.p.A.
Via F.lli Venuti 6
I-34072 Gradisca D'Isonzo (Go)(IT)**

(72) Inventor: **Rorato, Claudio
Via Cormons 7
I-33100 Udine(IT)**

(74) Representative: **D'Agostini, Giovanni, Dr.
D'AGOSTINI ORGANIZZAZIONE n. 17 via
G.Giusti
I-33100 Udine(IT)**

Rank Xerox (UK) Business Services
(3.08/2.18/2.0)

# Description

The subject of the present invention is a COFFEE-MACHINE RUN BY MICROPROCESSOR WITH A CONTROL FOR INTENSIVE WORK;

The innovation has a particular and convenient, although not exclusive, application for bar and restaurant service where intensive work is necessary in certain peak hours.

It is known that in the case of intensive work, the machine is not able to give an optimum performance in steam delivery, eg. to heat milk or for the quality of served coffee, as it would be able to do under normal working conditions.
Coffee-machine run by microprocessor with improved device for infusion equipped with several units, having a pressurized water boiler with a temperature-indicating probe for automatically controlling the temperature of water and steam in the boiler at a set value, and with a plurality of heat exchangers to be fed by a water pump and feeding respective distributors, and having corresponding delivery meters which produce electric impulses in proportion to the quantity of water passed to the respective distributors, the boiler being further provided for producing steam to be withdrawn, is well known in prior art (EP-A-0201656, EP-A-0093366), but these coffee-machines still are not conceived to support optimum performance in different delivery conditions, namely in low service condition and in maximum performance service condition. In fact all the existing coffee-machines are conceived for working in only one normal condition.

The scope of the present invention is to eliminate the above inconveniences, thus allowing the machine to be used in a rapid and flexible manner, with optimum performances even under conditions of intensive work, eg. heating of milk for "capuccini" during peak hours. The invention solves the problems with a coffee-machine of the kind defined in the preable of Claim 1 and characterized by the fact that it includes a microprocessor control system (M) to increase the normal setting value of the temperature so that the pressure of the saturated steam in the "set point" boiler increases accordingly to an extent which is sufficient to produce an increased amount of steam withdrawn directly from the boiler.
In the optimal solution the increase in pressure peak hours by the microprocessor system is 0.1-0.5 bar, and preferably 0.2 bar.
This solution makes it possible to run the machine at different service intensities allowing rapid adaption to different conditions of use and, at the same time, maintaining optimum quality of served coffee and rapid production of milk coffees/capuccini.
The above eliminates the necessity of having to set the boiler at a temperature which is too high which, if on one hand can give an optimal performance in heavy service conditions (excess production of steam, as above), on the other, compromises the infusion quality of the coffee in normal service conditions.

In an improved solution, the machine comprises volumetric meter means to feed water to the distributors, which are connected by a microprocessor system to a visualization system having a fan design made up of pilot lights which the said microprocessor system switches on, thus transmitting the delivery impulse count sequence of the respective said volumetric meters, in order to visualize the delivery in a dynamic manner, giving the operator the impression of seeing a fan in motion, with its speed being proportional to the delivery.

In an optimal solution the machine further comprises program means which send a block signal for switching-on the pilot lights when it detects that the meter in not has signal of motion for a predetermined period of time.
This solution allows immediate signalling when there is an important irregularity in operation of the feed system or control of water feed units.

The invention is explained in more detail in the following drawings which give one of the preferential solutions, the execution details of which are not to be held as limiting but only as examples.

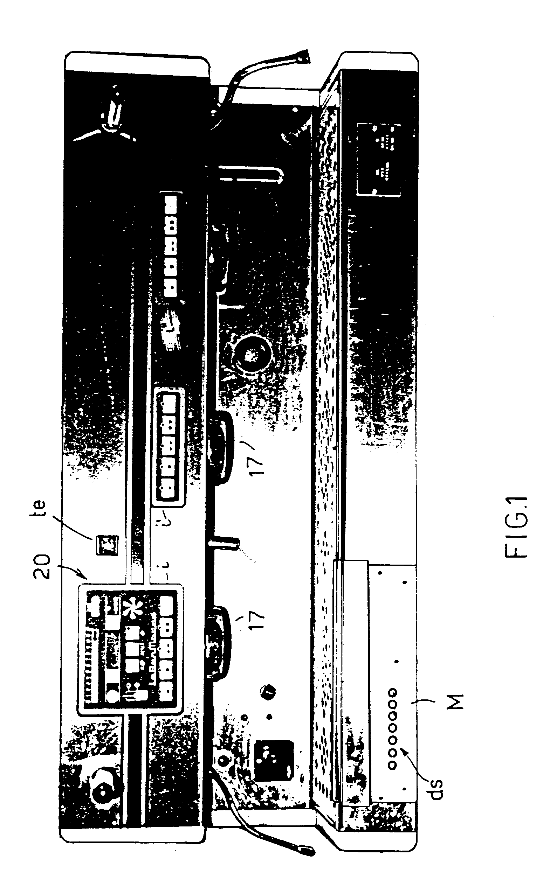

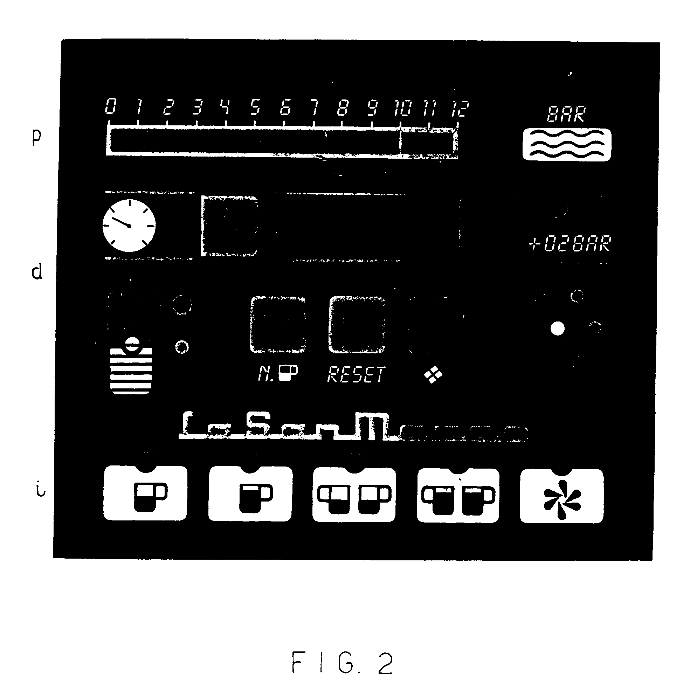

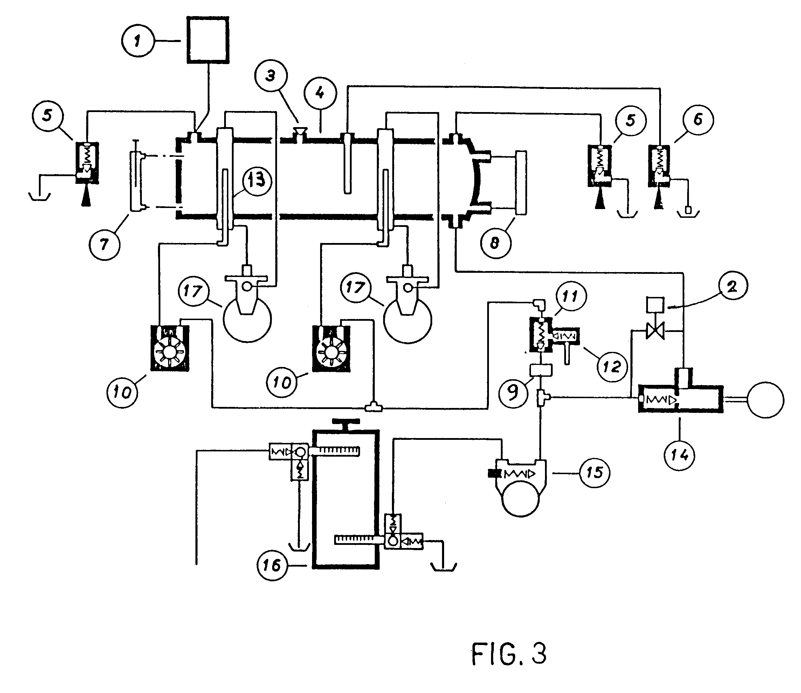

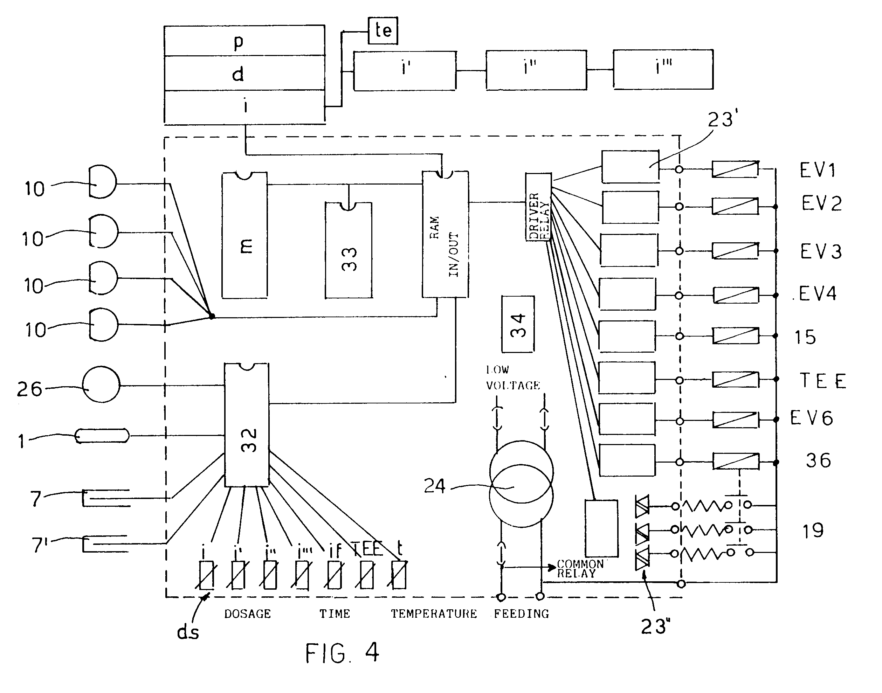

Figure 1 shows a front prospect of the machine from the operator's side; Figure 2 shows an enlarged view of the respective control panel; Figure 3 shows a hydraulic scheme of the respective functioning; Figure 4 shows the block diagram of the microprocessor system and respective connections.

As can be seen from the above figures, the invention shows a multifunction control panel (20) above the first distributor (17) which comprises:
- a luminous bar indicating variation in pressure from 0-12 bar (pressure of system or of pump);
- underneath this there is a clock sign and a press switch for temperature conversion in the boiler, which is shown on a display at the side, in pressure, by means of computerized processing of the stored temperature data into data equivalent to the steam saturation pressure; next to this a further switch is foreseen to activate or deactivate a n intensive work condition with, in this case, corresponding lighting-up or otherwise of a pilot light under which is written " + 02 bar". This press switch increases or does not increase the working pressure of the boiler from the normal setting eg. 0.9 bar to + 0.2 bar, that is to say, equal to 1.1 bar;

- beneath this there is a level indicator design having luminous minimum and maximum signs, beside this there is a programming key for the number of coffees, and then a reset key to zero the number of coffees or, combined with the keys below or with the tea key which is not on the panel, or with the key next to it on the right (infusion), to program the desired dosage of coffee, of water for tea, of the boiler temperature and of lag in infusion time. These values are set by trimmer (ds) on the front of the respective microprocessor system (M) accessible from outside and visualized on said display between the two upper keys. Lastly, on the extreme righthand side, there is a fan design with a rose of luminous pilot lights which the microprocessor system switches on by transmitting the delivery impulse count sequence of the respective volumetric meters of the distributors (10) so as to visualize the delivery in a dynamic manner, thus giving the operator the impression of seeing a fan in motion, with the speed in proportion to the delivery.

Five keys are arranged under this for the distribution of the types of coffees, having respective explicative designs showing the service possibilities for an espresso coffee (strong coffee), two espresso coffees (strong coffees), one weak coffee, two weak coffees and for continuous delivery with a manual stop (i). These last controls are also placed above the other corresponding distributor units (i',i"',...)

A key for tea is also provided, which is placed at the side, above said panel.

The machine, as shown in Fig. 3 in which only two distributor units (17) are schematically shown as an example, comprises a steam-charged boiler (4) having a safety valve for overpressure (3), a temperature-indicating probe (1), two distributors for steam emission (5), a hot water distributor (6), an electric transducer for water pressure (9) arranged downstream of the boiler check valve (11) with an expansion valve (12) visualized on the display (p), an optic level (8), and an automatic level (7).

It can be seen that each distributor unit (17) is associated with a delivery meter (10) which continuously controls the delivery by means of electric impulses. These impulses, which are in proportion to the passed volume, are sent to the microprocessor system (m) which governs the programmed dosages.

The feeding water flows through the water-softener (16) and feeds the following two circuits through the pump (15):

- the boiler feeding circuit through the manual charge tap (14) or an automatic level valve (2); - feeding circuit for distributor units (17) through the check valve (11) and expansion valve (12) and said delivery volumetric meters (10).

The block diagram shown in Figure 4 explains the functional system better.

The above diagram further clarifies that a low voltage transformer (24) which feeds the microprocessor system (m) in the extractable and interchangeable unit (M). This unit at low voltage (10-24V) is foreseen on a sole card. In the low voltage area, a programme element (33) and a random access memory means (RAM) are connected to the microprocessor (m) together with the distributor meters (10) and the analogue-digital converter (32), which in turn is connected with the respective regulating trimmers (ds) for all the program regarding the volumetric dosages of the coffee (i,i',i",i'"), the infusion times (if), delivery of hot water for tea (TEE) and for the boiler temperature program (t). Further, the temperature probe (1) and the electric pressure transmitter (26) are connected and visualize the corresponding values on the display; lastly, the signal of the level probe and of the maximum probe (7,7') of the boiler are connected.

The random access memory (RAM) is connected to the control panel in order to operatively determine the visualization of the graphic pressure bar in the upper line of the respective multi-function operative panel, the temperature display with the functional press-switch panel as already explained and the press-switch panel to control delivery (i,i',i",i'") and, last of all, the tea press-switch.

The random access memory (RAM) is finally connected to the various relays (23) controlling the solenoid valves of the distributor (EV1,EV2,EV3,EV4), pump (15), the tea solenoid valve (TEE), the solenoid valve for the automatic distribution of the water in time (EV6), the relay for heater block (36), the heating heaters (19) by means of the respective triacs (23").

The machine conveniently foresees that said means of lag consist of a timing device common to all distributor units (17) which acts on the sole relay (23) of the pump (15), as it is foreseen that the corresponding solenoid valve (EV1,EV2,EV3...) is of the 3-way type and is normally closed. When the unit's distribution press-switch is pressed, this puts the water main in communication, controlled by the check valve (11) and the overpressure valve (12), by means of the respective exchangers (13) in the boiler (4).

It is important to further notice that the said timing device can be set by a regulation means (if) which acts on the microprocessor system with analogue-digital converter (32), random access memory (RAM), program (33) and microprocessor (m).

Figure 1 shows a 3-unit machine whereas the block diagram foresees a 4-unit machine, but it is evident that said machine and the respective diagram can be extended for different numbers of units.

## Claims

1.  COFFEE-MACHINE RUN BY MICROPROCESSOR WITH IMPROVED DEVICE FOR INFUSION EQUIPPED WITH SEVERAL UNITS, having a pressurized water boiler (4) with a temperature-indicating probe (1) for automatically controlling the temperature of water and steam in the boiler (4) at a set value, and with a plurality of heat exchangers (13) to be fed by a water pump (15) and feeding respective distributors (17), and having corresponding delivery meters (10) which produce electric impulses in proportion to the quantity of water passed to the respective distributors (17), the boiler being further provided for producing steam to be withdrawn, characterized by the fact that it includes a microprocessor control system (M) to increase the normal setting value of the temperature so that the pressure of the saturated steam in the "set point" boiler (4) increases accordingly to an extent which is sufficient to produce an increased amount of steam withdrawn directly from the boiler.

2.  A machine according to claim 1, characterized in that this increase of pressure is between 0.1 and 0.5 bar.

3.  A machine according to claim 1, characterized in that this increase in pressure is equal to 0.2 bar.

4.  A machine according to claim 1, characterized in that said volumetric delivery meters (10) are connected by the said microprocessor system (M) to a visualization system having a fan design with a rose of luminous pilot lights which the said microprocessor system switches on by transmitting the delivery impulse count sequence of the respective said volumetric meters (10) of the distributors (17), so as to visualize the delivery in a dynamic manner, thus giving the operator the impression of seeing a fan in motion, the speed being in proportion to the delivery, the control system (M) being connected to said delivery means.

5.  A machine according to the previous claim, characterized by the fact that it includes further program means which send a block switch-on signal to said uminous pilot lights when it detects that the meter does not emit signals of motion for a predetermined period of time.

6.  A machine according to claim 1, characterized in that it further includes monitoring and control microprocessor means (M) which activate the visualization of a luminous bar which indicates the variation from zero to "n" bar for the respective delivery pressure.

7.  A machine according to claim 1, characterized in that it further includes monitoring and control microprocessor means (M) which activate the visualization of the boiler temperature, alternately to the pressure, by means of computerized elaboration of the stored temperature data into equivalent steam saturation pressure data.

8.  A machine according to claim 1, characterized in that it further includes monitoring and control microprocessor means (M) which activate the visualization on a level indicator design of luminous signals corresponding to minimum and maximum.

9.  A machine according to claim 1, characterized in that it also has five control keys corresponding to each distributor unit (17 ) to control the delivery of the types of coffee with respective clarifying designs showing the possibility of serving an espresso coffee (strong coffee), two espresso coffees (strong coffees), one weak coffee, two weak coffees and for continuous delivery with manual stop (i,i',i"...) which are controlled by a microprocessor system (M) and whose parameters can be regulated by respective trimmers (ds).

10. A machine according to claim 1, characterized in that it further includes:
    - control means for delivery of coffee with infusion or otherwise, preset to actuate each distributor means (17);
    - a microprocessor system (M) connected to said solenoid valve means (EV1,EV2,EV3...), respectively to said lag means to said control means (i,i',i",...) for delivery of the coffee with infusion or otherwise, and able to:
    - store the distributor subjected to the infusion control and to line up the respective commands according to their sequence;

- transmit a control in order to said sequence to the corresponding solenoid valve relating to the lag means of the distributor unit in question, so that the following cycles are actuated for each unit stored in logical lined-up sequence:
- delivery lag from pump to said distributor;
- inflow of feed water at water main pressure or at steam pressure present at that moment in the exchanger, for a preset quantity of water or time necessary for a convenient infusion time;
- the actual delivery by means of said pump at the normal delivery pressure.

11. A machine according to claim 1, characterized in that the said lag means consist of a timing device which is common to all the distributor units (17) working on the sole relay (23) of the pump (15) as the foreseen corresponding solenoid valve (EV1,EV2,EV3...) is of the 3-way type and is normally closed, and when the unit delivery switch is pressed it puts the water main net in communication, controlled by a check valve (11) and an overpressure valve (12), through the respective exchangers (13) in the boiler (4).

12. A machine according to claim 2, characterized in that said timing device can be set by regulation means (if) which works on the microprocessor system with analogue-digital converter (32), memory (RAM), program (33) and microprocessor (m).

13. A machine according to claim 2, characterized in that it has an extractable and interchangeable microprocessor unit (M) consisting of a sole card with a low voltage transformer (24) which feeds at low voltage (10-24V) the inside microprocessor (m) to which the following means are connected, together with a program means (33) and random access memory (RAM):
- visualization means and multi-function control means (p,d,i,te,i',i",i"');
- volumetric count delivery means (10) for the respective distributors (17);
- analogue-digital conversion means (32) which, in turn, are connected to the respective regulation trimmers (ds) for all the programs regarding the volumetric dosages of the coffee (i,i',i",i"'), of the infusion times (if), of delivery of hot water for tea (TEE) and for the programming of the boiler temperature (t), as a temperature probe in the boiler (1), an electric pressure transmitter (26) and level signals in the boiler (7,7') being also connected;
- driver relay means and respective relays (23') which actuate the corresponding solenoid valves of the distributors (EV1,EV2,EV3,EV4), the pump (15), the tea solenoid valve (TEE), the solenoid valve for delivery of water at time (EV6), the relay for heater block (36), the heating heaters (19) by means of the respective triacs (23").

**Revendications**

1. Machine à café à commande par microprocesseur avec un dispositif amélioré pour les infusions équipé de plusieurs unités, ayant un récipient préssurisé pour faire bouillir l'eau (4) avec une sonde pour indiquer la température (1) qui contrôle automatiquement la température de l'eau et de la vapeur dans le récipient (4) à un degré déterminé, avec plusieurs échangeurs de chaleur (13) qui sont alimentés par une pompe à eau (15) et qui alimentent des distributeurs respectifs (17), ayant des débitmètres correspondants (10) qui produisent des impulsions électriques en proportion à la quantité d'eau passée dans les distributeurs respectifs (17), le récipient pour faire bouillir l'eau étant en outre équipé pour produire de la vapeur qui peut être retirée, et caractérisée par le fait qu'elle comprend un système de contrôle par microprocesseur (M) pour augmenter le degré normal auquel on fixe la température de façon à ce que la pression de la vapeur saturée dans le récipient " à point d'ébullition fixé" (4) augmente en conséquence jusqu'à un degré suffisant pour produire une quantité de vapeur plus importante que l'on peut retirer directement du récipient.

2. Une machine selon la revendication 1. caractérisée par le fait que cette augmentation de la pression se situe entre 0.1 et 0.5 bar.

3. Une machine selon la revendication 1. caractérisée par le fait que cette augmentation de la pression est égal à 0.2 bar.

4. Une machine selon la revendication 1. caractérisée par le fait que lesdits débimètres volumétriques (10) sont reliés, grâce audit microprocesseur (M), à un système de visualisation ayant la forme d'un éventail avec une rose de veilleuses lumineuses que ledit microprocesseur allume en transmettant la séquence de comptage d'arrivée du débit desdits compteurs volumétriques respectifs (10) des distributeurs (17), de façon à visualiser le débit d'une manière dynamique, donnant ainsi à l'opérateur l'impression de voir un éventail en mouvement , la vitesse étant proportionnée au débit, vu que le système de contrôle (M) est reliée audit système de distribution.

5. Une machine selon la revendication précédente, caractérisée par le fait qu'elle comprend un programme supplémentaire qui envoie un signal d'allumage du secteur auxdites veilleuses lumineuses lorsqu'il détecte que le débitmètre n'émet aucun signal de mouvement pendant un laps de temps prédéterminé.

6. Une machine selon la revendication 1. caractérisée par le fait qu'elle comprend en outre un microprocesseur de surveillance et de contrôle (M) qui met en marche la visualisation d'une barre lumineuse qui indique la variation de zero à "n" bars de la pression des débits respectifs.

7. Une machine selon la revendication 1 caracactérisée par le fait qu'elle comprend en outre un microprocesseur de surveillance et de contrôle (M) qui met en marche la visualisation de la température du récipient pour faire bouillir l'eau, en alternance avec la pression, grâce à l'élaboration informatisée des données mémorisées relatives à la température en données équivalentes relatives à la pression de saturation de la vapeur.

8. Une machine selon la revendication 1. caractérisée par le fait qu'elle comprend en outre un microprocesseur de surveillance et de contrôle (M) qui met en marche la visualisation de signaux lumineux sur un indicateur de niveau correspondant au minimum et au maximum.

9. Une machine selon la revendication 1. caractérisée par le fait qu'elle possède également cinq touches de commande qui correspondent à chaque unité de distribution (17) pour contrôler la distribution des types de café, munies de dessins explicatifs qui montrent les possibilités de servir un café express (café fort), deux cafés express (cafés forts), un café léger, deux cafés légers, et pour la distribution continue avec arrêt manuel (i, i, i"....), qui sont contrôlées par un microprocesseur (M) et dont les paramètres peuvent être réglés par des régulateurs respectifs (ds).

10. Une machine selon la revendication 1. caractérisée par le fait qu'elle comprend en outre:

- un système de contôle pour la distribution du café avec infusion ou autre, prédéterminé pour mettre en marche chaque distributeur (17);
- un microprocesseur (M) relié à ladite vanne électromagnétique (EV1, EV2, EV3,....), et respectivement audit système de retardement et au système de contrôle (i, i'; i",...) pour la distribution du café avec infusion ou autre, et en mesure de:
- mémoriser (les opérations) du distributeur soumis au contrôle d'infusion et aligner les ordres respectifs en fonction de leur séquence;
- transmettre un ordre de façon à connecter ladite séquence à la vanne électromagnétique correspondante se reliant au système de retardement de l'unité de distribution en question, si bien que les cycles suivants sont mis en marche pour chaque unité mémorisée dans une séquence alignée logique:
- un retardement de distribution de la pompe audit distributeur;
- un afflux d'eau d'alimentation sous pression principale d'eau ou sous pression de vapeur présentes au moment même dans l'échangeur, pour une quantité d'eau ou un laps de temps prédéterminés nécessaires pour obtenir un temps d'infusion acceptable;
- la distribution effective au moyen de ladite pompe à la pression de distribution normale.

11. Une machine selon la revendication 1., caractérisée par le fait que ledit retardement consiste en un système de minuterie qui est commun à tous les distributeurs (17) agissant seulement sur le relais (23) de la pompe (15) puisque la vanne électromagnétique correspondante prévue (EV1, EV2, EV3,...) est triple et est normalement fermée, et lorsque l'on appuie sur l'interrupteur de l'unité de distribution, il met en communication le réseau d'eau principal, contrôlé par une soupape de retenue (11) et une soupape pour l'excès de pression (12), à travers les échangeurs respectifs (13) dans le récipient pour faire bouillir l'eau (4).

12. Une machine selon de la revendication 2, caractérisée par le fait que ledit système de minuterie peut être mis en place par un système de réglage (if) qui agit sur le microprocesseur avec convertisseur analogique-numérique (32), mémoire (ELF), programme (33) et microprocesseur (m).

13. Une machine selon la revendication 2, caractérisée par le fait qu'elle possède un microprocesseur que l'on peut extraire ou changer (M) qui consiste en une fiche unique avec un transformateur à basse tension (24) qui alimente à basse tension (10-24V) le microprocesseur interne (m) auquels les systèmes suivants sont reliés, en même temps que le programme (33) et la mémoire à accès aléatoire (ELF):
- système de visualisation et système de contrôle multifonctionnel (p, d, i, te i', i", i"');
- les débitmètres volumétriques pour les distributeurs respectifs (17);
- les convertisseurs analogiques-numériques (32) qui, à tour de rôle sont reliés aux régulateurs respectifs (ds) pour tous les programmes qui concernent les dosages volumétriques du café (i, i', i", i"'), des temps d'infusion, de la distribution d'eau chaude pour le thé, et pour la programmation de la température du récipient pour faire bouillir l'eau (t), vu qu'une sonde pour la température dans le récipient pour faire bouillir l'eau (1), un transmetteur de pression électrique (26) et des indicateurs de niveau dans le récipient (7, 7') y sont également reliés;
- le relais conducteur et les relais respectifs (23') qui mettent en marche les vannes électromagnétiques des distributeurs correspondantes (EV1, EV2, EV3, EV4), la pompe, la vanne électromagnétique pour le thé (TTE), la vanne électromagnétique pour la distribution d'eau à l'occasion (EV6), le relais pour le bloc de chauffage (36), les réchauds chauffants (19) au moyen des triacs respectifs (23").

**Patentansprüche**

1. KAFFEEMASCHINE MIT MIKROPROZESSOR UND VERBESSERTER EINSCHENKVORRICHTUNG MIT MEHREREN EINHEITEN, mit einem Druckwasserkocher (4) mit Meßfühler (1) mit Temperaturanzeige zur automatischen Beibehaltung der Temperatur von Wasser und Dampf im Kocher (4) auf einem vorgegebenen Wert, und mit mehreren Wärmeaustauschern (13), die von einer Wasserpumpe (15) versorgt werden und ihrerseits Verteiler (17) versorgen, sowie mit Ausgabemeßgeräten (10), die entsprechend der an die Verteiler (17) abgegebe-nen Wassermenge elektrische Impulse erzeu-gen, wobei der Kocher auch dazu ausgerüstet ist, Dampf zu erzeugen, der dann entzogen wird, gekennzeichnet dadurch, daß sie ein Mikroprozessor-Steuersystem (M) enthält, um den normalen vorgegebenen Temperaturwert anzuheben, so daß der Druck des gesättigten Dampfes in dem "Vorgabewert-Kocher" (4) so weit ansteigt, daß eine größere Menge von Dampf erzeugt wird, der dem Kocher direkt entzogen wird.

2. Eine Maschine entsprechend Anspruch 1, gekennzeichnet dadurch, daß dieser Druckanstieg zwischen 0,1 und 0,5 bar beträgt.

3. Eine Maschine entsprechend Anspruch 1, gekennzeichnet dadurch, daß dieser Druckanstieg 0,2 bar beträgt.

4. Eine Maschine entsprechend Anspruch 1, gekennzeichnet dadurch, daß die genannten Ausgabevolumen-Meßgeräte (10) durch besagtes Mikroprozessorsystem (M) mit einem Anzeigesystem verbunden sind, das fächerförmig angelegt ist, mit einer Rosette von leuchtenden Kontrollampen, die das genannte Mikroprozessorsystem einschaltet, indem es die von den erwähnten Volummessern (10) der Verteiler (10) abgegebenen Impuls-Zählsequenzen überträgt und so die Abgabe dynamisch sichtbar macht, wodurch der die Anlage Bedienende den Eindruck hat, einen sich bewegenden Fächer zu sehen, wobei die Geschwindigkeit von der Ausgabe abhängt, da das Kontrollsystem (M) mit besagter Ausgabeeinrichtung verbunden ist.

5. Eine Maschine entsprechend dem vorangegangenen Anspruch, gekennzeichnet dadurch, daß sie weitere programmierte Einrichtungen enthält, die ein Signal zum Anschalten des Blocks zu den genannten Kontrollampen senden, wenn sie feststellen, daß das Meßgerät eine vorbestimmte Zeit lang keine Betriebssignale ausstrahlt.

6. Eine Maschine entsprechend Anspruch 1, gekennzeichnet dadurch, daß sie des weiteren Überwachungs- und Mikroprozessor-Steuerungen (M) enthält, die einen Leuchtbalken sichtbar werden lassen, der die Veränderung des Abgabedrucks von null bis "n" bar anzeigt.

7. Eine Maschine entsprechend Anspruch 1, gekennzeichnet dadurch, daß sie des weiteren Überwachungs- und Mikroprozessor-Steuerungen (M) enthält, die, abwechselnd mit dem Druck, die Kochertemperatur sichtbar werden lassen, durch computerisierte Umrechnung der gespeicherten Wärmedaten in entsprechende Dampfsättigungsdruckdaten.

8. Eine Maschine entsprechend Anspruch 1, gekennzeichnet dadurch, daß sie des weiteren Überwachungs- und Mikroprozessor-Steuerungen (M) enthält, die Leuchtsignale auf einer Niveauanzeige sichtbar werden lassen, welche dem Minimum und dem Maximum entsprechen.

9. Eine Maschine entsprechend Anspruch 1, gekennzeichnet dadurch, daß sie auch fünf Kontrolltasten besitzt, die den Verteilereinheiten (17) entsprechen, zur Kontrolle der Ausgabe der verschiedenen Kaffeearten, mit entsprechenden verdeutlichenden Symbolen, die die folgenden Angebote zeigen: ein Espresso (starker Kaffee), zwei Espressos (starke Kaffees), ein schwacher Kaffee, zwei schwache Kaffees sowie für stetigen Ausschank mit Handabstellung (i, i', i"...), die durch ein Mikroprozessorsystem (M) gesteuert werden, und deren Parameter durch entsprechende Trimmer (ds) geregelt werden können.

10. Eine Maschine entsprechend Anspruch 1, gekennzeichnet dadurch, daß sie des weiteren enthält:
   - Steuervorrichtungen zur Kaffeeabgabe durch Ausgießen oder auf andere Art, voreingestellt zur Ingangsetzung jedes der Verteiler (17);
   - ein Mikroprozessor-System (M), das mit den genannten Solenoidventilen (EV1, EV2, EV3...) verbunden ist, bzw. mit der erwähnten Phasenverschiebeinrichtung mit besagter Steuervorrichtung (i, i', i"...) zur Kaffeeabgabe durch Ausgießen oder auf andere Art, und fähig ist,
   - den zur Ausschanksteuerung dienenden Verteiler einzuspeichern und die betreffenden Befehle ihrer Reihenfolge nach aufzureihen;
   - eine Steuerung in der besagten Reihenfolge zu dem entsprechenden Solenoidventil zu übertragen, in Verbindung mit der Phasenverschiebeinrichtung der betreffenden Verteilereinheit, so daß die folgenden Zyklen für jede Einheit in logischer Reihenfolge gespeichert ausgeführt werden:
   - Ausgabeverzögerung von der Pumpe zu besagtem Verteiler;
   - Einströmen des Zufuhrwassers unter dem Druck der Wasserleitung oder dem in dem Moment im Kocher herrschenden Dampfdruck, für eine vorgegebene Wassermenge oder Zeit, die für einen ordnungsgemäßen Ausschank nötig ist;

   - die eigentliche Ausgabe mittels besagter Pumpe unter normalem Ausgabedruck.

11. Eine Maschine entsprechend Anspruch 1, gekennzeichnet dadurch, daß die genannten Phasenverschiebeeinrichtungen aus einer Zeitschaltvorrichtung bestehen, die allen Verteilereinheiten (17) gemein ist, die auf dem Basisrelais (23) der Pumpe (15) arbeiten, da das vorgesehene entsprechende Solenoidventil (EV1, EV2, EV3...) von dem Dreiwegtyp und normalerweise geschlossen ist; wird der Ausgabeschalter der Einheit gedrückt, stellt es die Verbindung zum Wasserleitungsnetz her, gesteuert von einem Absperrventil (11) und einem Überdruckventil (12), durch die betreffenden Austauscher (13) im Kocher (4).

12. Eine Maschine entsprechend Anspruch 2, gekennzeichnet dadurch, daß die genannte Zeitschaltvorrichtung durch eine Regelvorrichtung (if) eingestellt werden kann, die auf dem Mikroprozessorsystem mit Analog-Digitalumsetzer (32), Speicher (RAM), Programm (33) und Mikroprozessor (m) arbeitet.

13. Eine Maschine entsprechend Anspruch 2, gekennzeichnet dadurch, daß sie eine herausziehbare und auswechselbare Mikroprozessoreinheit (M) besitzt, die aus einer Basiskarte mit einem Niederspannungs-Transformator (24) besteht, der mit niederer Spannung (10-24V) den innen befindlichen Mikroprozessor (m) speist, mit welchem die folgenden Einrichtungen verbunden sind - zusammen mit einer Programmiervorrichtung (33) und Random-Speicher (RAM) - :
   - Anzeigevorrichtungen und Mehrfunktions-Steuerungen (p, d, i, te, i', i", i'");
   - Ausgabevolumenzähler (10) für die entsprechenden Verteiler (17);
   - Analog-Digitalumsetzer (32), die abwechselnd verbunden werden mit den betreffenden Regeltrimmern (ds) für alle Programme bezüglich Kaffeedosierung (i, i', i", i'"), Einschenkzeiten (if), Heißwasserausgabe für Tee (TEE), sowie für die Programmierung der Kocherwärme (t), da auch ein Temperaturfühler im Kocher (1), ein elektrischer Drucküberträger (26) und Wasserstandsanzeigen für den Kocher (7, 7') angeschlossen sind;
   - Mitnehmerrelais sowie Relais (23'), die die entsprechenden Solenoidventile der Verteiler (EV1, EV2, EV3, EV4), die Pumpe (15), das Tee-Solenoidventil (TEE), das Solenoidventil zur Ausgabe von Wasser nach Zeit (EV6), das Relais für den Kocherblock (36) sowie die Erhitzer (19) mittels der entsprechenden Triacs (23'') in Betrieb setzen.

FIG.1

F I G. 2

FIG. 3

EP 0 328 705 B1

FIG. 4

13